Europäisches Patentamt

European Patent Office

Office européen des brevets

(19)

(11) **EP 1 184 996 B1**

(12) **EUROPEAN PATENT SPECIFICATION**

(45) Date de publication et mention
de la délivrance du brevet:
**08.11.2006 Bulletin 2006/45**

(51) Int Cl.:
*H04B 1/707* *(2006.01)*   *H04L 23/02* *(2006.01)*

(21) Numéro de dépôt: **01402223.0**

(22) Date de dépôt: **24.08.2001**

(54) **Procédé de réception non cohérente DP-Mok avec combinaison de trajets multiples et récepteur correspondant**

Ein nichtkoheräntes DP-MOK Empfangsverfahren mit Mehrwegkombination und Empfänger dafür

Non-coherent DP-MOK reception method with multipath combination, and receiver for carrying out the method

(84) Etats contractants désignés:
**DE GB IT NL**

(30) Priorité: **28.08.2000 FR 0010981**

(43) Date de publication de la demande:
**06.03.2002 Bulletin 2002/10**

(73) Titulaire: **COMMISSARIAT A L'ENERGIE ATOMIQUE**
**75752 Paris Cédex 15 (FR)**

(72) Inventeurs:
 • **Ouvry, Laurent**
  **38100 Grenoble (FR)**
 • **Lequepeys, Jean-René**
  **38600 Fontaine (FR)**
 • **Daniele, Norbert**
  **38330 Montbonnot (FR)**

 • **Noguet, Dominique**
  **38100 Grenoble (FR)**

(74) Mandataire: **Viering, Hans-Martin et al**
**Patentanwälte**
**Viering, Jentschura & Partner,**
**Postfach 22 14 43**
**80504 München (DE)**

(56) Documents cités:
**EP-A- 0 952 678**   **EP-A- 1 065 849**
**US-A- 5 361 276**   **US-A- 5 692 007**

 • **ELHAKEEM A K ET AL: "MODIFIED SUGAR/DS: A NEW CDMA SCHEME" IEEE JOURNAL ON SELECTED AREAS IN COMMUNICATIONS,US, IEEE INC. NEW YORK, vol. 10, no. 4, 1 mai 1992 (1992-05-01), pages 690-704, XP000275261 ISSN: 0733-8716**

## Description

### Domaine technique

La présente invention a pour objet un procédé de réception non cohérente DP-MOK avec combinaison de trajets multiples et un récepteur correspondant.

L'invention trouve une application générale dans les communications numériques et plus particulièrement dans les réseaux locaux sans fil (WLAN), dans les boucles locales d'abonnés sans fil (WLL), en téléphonie mobile, en domotique et télécollecte, en communication dans les transports, etc...

### Etat de la technique antérieure

L'invention relève de la technique d'étalement de spectre. On sait que cette technique consiste en la modulation d'un symbole numérique à transmettre par une séquence pseudo-aléatoire connue de l'utilisateur. Chaque séquence est composée de N éléments appelés "chips", dont la durée est le $N^{ième}$ de la durée d'un symbole. Il en résulte un signal dont le spectre est étalé sur une plage N fois plus large que celle du signal original. A la réception, la démodulation consiste à corréler le signal reçu avec la séquence utilisée à l'émission pour retrouver le symbole de départ.

Les avantages de cette technique sont nombreux :

- discrétion, puisque la puissance du signal émis étant constante et répartie dans une bande N fois plus large, sa densité spectrale de puissance est réduite d'un facteur N ;
- immunité vis-à-vis des émissions à bande étroite volontaires ou parasites, l'opération de corrélation réalisée au niveau du récepteur conduisant à l'étalement spectral de ces émissions ;
- difficulté d'interception (pour les rapports signal à bruit usuels), puisque la démodulation requiert la connaissance de la séquence utilisée à l'émission ;
- résistance aux trajets multiples qui, sous certaines conditions, provoquent des évanouissements sélectifs en fréquence et donc n'affectent que partiellement le signal émis ;
- possibilité d'un accès multiple à répartition par les codes (AMRC ou CDMA en anglais pour "Code Division Multiple Access") : plusieurs liaisons à étalement de spectre par séquence directe peuvent partager la même bande de fréquence en utilisant des codes d'étalement orthogonaux.

Mais cette technique présente un inconvénient qui est sa faible efficacité spectrale. On désigne par là le rapport entre le débit en données binaires et la largeur de la bande occupée. Si chaque symbole de données contient m bits, le débit en données binaires est égal à m fois le débit en symboles, soit mDs. Quant à la bande occupée, elle est égale au double de la fréquence en "chips", c'est-à-dire à 2N fois le débit en symboles, soit 2NDs. On a donc, finalement, une efficacité spectrale

égale au rapport $\dfrac{mDs}{2NDs}$, soit $\dfrac{m}{2N}$.

On pourrait penser augmenter l'efficacité spectrale en diminuant N, mais cela irait à l'encontre des qualités propres à l'étalement et, notamment, nuirait à l'immunité des transmissions. On pourrait aussi penser augmenter le débit en symboles, mais le phénomène d'interférences entre symboles irait en s'aggravant.

Une autre solution consisterait à avoir recours à l'accès multiple à répartition par les codes (AMRC) et, en particulier, à sa variante synchrone (dite, en anglais MC-CDMA pour "Multi Code-Code Division Multiple Access"). Mais cette méthode a également ses limites liées à l'apparition d'interférences d'accès multiple.

Une dernière solution consisterait à augmenter m, nombre de données binaires par symbole, ce qui conduirait à utiliser des modulations complexes, dites d'ordre supérieur. On peut rappeler en quoi elles consistent pour deux d'entre elles à savoir la modulation dite PSK ou "Phase Shift Keying", qui est une modulation (ou un codage) de phase, et la modulation dite MOK pour "M-ary Orthogonal Keying" ou modulation orthogonale d'ordre M. On peut en trouver une description dans deux ouvrages généraux :

- Andrew J. VITERBI : "CDMA-Principles of Spread Spectrum Communication" Addison-Wesley Wireless Communications Series, 1975,
- John G. PROAKIS : "Digital Communications" McGraw-Hill International Editions, $3^{ème}$ édition, 1995.

S'agissant tout d'abord de la modulation de phase, il s'agit le plus souvent d'une modulation binaire, notée BPSK, ou quaternaire, notée QPSK. Dans le premier cas, on code des symboles à un élément binaire (m=1) et dans le second des symboles à deux éléments binaires (m=2).

Ces modulations sont le plus souvent mises en oeuvre sous leur forme différentielle (DBPSK, DQPSK), (en abrégé, par la suite "DP"), qui assure une bonne robustesse dans les canaux difficiles, dès lors qu'aucune boucle de récupération de phase n'est nécessaire. Cette forme différentielle est aussi très bien adaptée au traitement de la diversité des trajets de propagation.

A la réception, un démodulateur différentiel effectue la multiplication entre le signal à démoduler et sa version retardée d'une période symbole. Dans le cas de la modulation quaternaire, on utilise deux voies de signal, une voie qui traite la composante du signal en phase avec une porteuse et une autre voie qui traite la composante en quadrature avec la porteuse.

S'agissant maintenant de la modulation MOK, il s'agit d'une technique dans laquelle on associe à chaque symbole à émettre un signal pris parmi un ensemble de signaux orthogonaux. Ces signaux peuvent être des codes d'étalement d'une même famille de codes orthogonaux. Dans ce cas, la modulation réalise aussi l'étalement. Mais ces signaux peuvent aussi ne pas être parfaitement orthogonaux car la contrainte d'orthogonalité est moins forte qu'il n'y paraît. Mais naturellement, dans ce cas les performances sont moins bonnes.

Si un symbole est constitué de m bits, il existe $2^m$ configurations possibles pour les symboles. Le nombre M de codes disponibles doit donc être au moins égal à M, avec $M=2^m$. Si la longueur de ces codes est N, on sait qu'on peut trouver N codes orthogonaux. On a donc M=N et le nombre de bits par symbole est donc limité à $\log_2 N$.

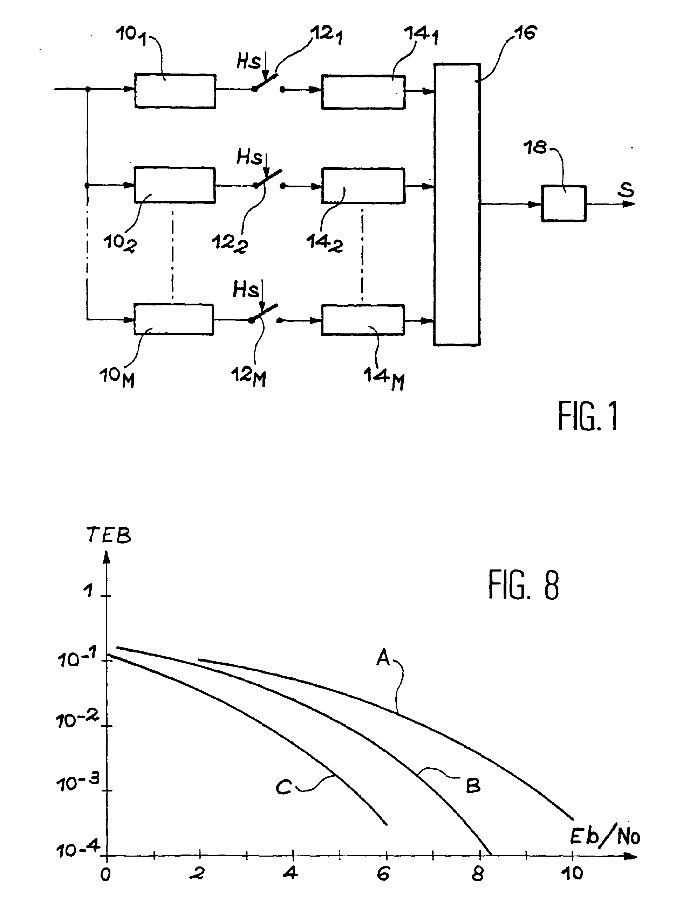

Un récepteur MOK connu est illustré sur la figure 1 annexée. On y voit une batterie de filtres adaptés $10_1$, $10_2$, ..., $10_M$, suivis d'autant d'échantillonneurs $12_1$, $12_2$, ..., $12_M$, des circuits $14_1$, $14_2$, ..., $14_M$ de détermination du module ou du carré du module du signal échantillonné, un circuit 16 de détermination du signal qui présente le plus fort module, autrement dit de détermination du numéro de la voie correspondant au plus fort signal, un circuit 18 qui, à partir du numéro de cette voie, restitue le code donc le symbole.

La technique MOK connaît une variante dite MBOK ("M-ary Bi-Orthogonal Keying") consistant à ajouter au jeu de signaux orthogonaux utilisés dans une modulation MOK leurs opposés pour constituer un jeu de 2M signaux, qui ne sont évidemment plus tous orthogonaux entre eux. La démodulation utilise encore M corrélateurs, adaptés à chacun des M codes orthogonaux, mais nécessite en outre des moyens de récupération du signe.

Si, pour augmenter l'efficacité spectrale, on augmentait d'une unité le nombre m d'éléments binaires dans chaque symbole, le nombre M de codes disponibles serait doublé, ce qui multiplierait par 2 le nombre de voies du récepteur. La complexité s'accroît donc beaucoup plus vite que l'efficacité spectrale. Cette technique présente donc certaines limites.

Les modulations MOK et MBOK sont utilisées dans certains systèmes de communications numériques, en liaison avec une structure de réception cohérente, laquelle nécessite la connaissance de la phase de la porteuse. L'envoi d'un préambule, avant l'émission des données utiles, est un procédé classique permettant l'estimation de cette phase. Cependant, dans les canaux soumis à des évanouissements et/ou à des trajets multiples, la phase de la porteuse subit des variations qui peuvent être rapides et que le système de réception doit détecter et compenser. Cela s'obtient généralement par l'émission périodique de préambules qui occupent alors le canal et entraînent une diminution du débit de données utiles. Selon ce schéma, les durées du préambule et du paquet de données utiles doivent être inférieures au temps de cohérence du canal (temps pendant lequel le canal est considéré comme étant stationnaire). De plus, la complexité de la structure de réception est accrue.

Pour ces raisons, l'homme de l'art préfère avoir recours à des schémas de démodulation non cohérente, ou différentiellement cohérente, qui ne nécessitent pas la connaissance de l'information de phase. Ces techniques éliminent le recours aux préambules longs, aux estimateurs de phase et aux dérotateurs de phase, au prix d'une légère perte de sensibilité. Par ailleurs, la démodulation non cohérente simplifie très fortement le traitement de la diversité des trajets de propagation puisque chaque trajet possède, entre autres, sa propre phase (et donc nécessiterait son propre estimateur de phase dans un schéma cohérent).

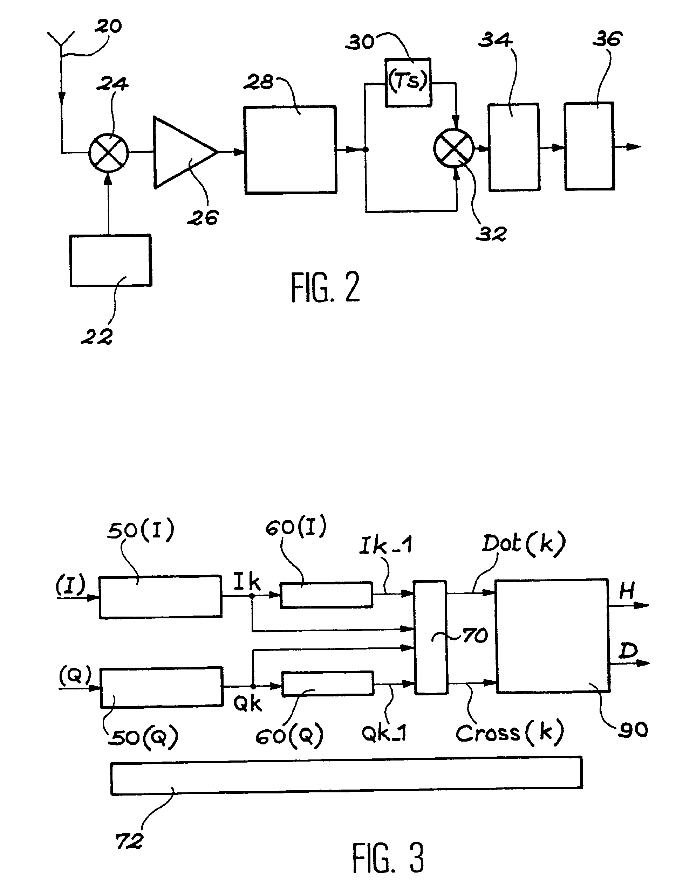

On connaît par ailleurs des récepteurs à étalement de spectre utilisant une démodulation différentielle de phase DP. La figure 2 annexée montre ainsi un récepteur comprenant une antenne 20, un oscillateur local 22, un multiplieur 24, un amplificateur 26, un filtre adapté 28, une ligne à retard 30, un multiplieur 32, un intégrateur 34 et un circuit de décision 36.

Le principe de fonctionnement de ce récepteur est le suivant.

Le filtre adapté 28 réalise l'opération de corrélation entre le signal reçu et la séquence d'étalement qui a été utilisée pour émettre les données. Le principe de la modulation différentielle de phase choisi à l'émission entraîne que l'information est portée par la différence de phase entre les signaux à la sortie du filtre adapté 28 et à la sortie de la ligne à retard 30. Cette information est restituée par le multiplieur 32.

A chaque trajet de propagation correspond un pic de corrélation à la sortie du multiplieur 32. Le rôle de l'intégrateur 34 consiste à prendre en compte les informations apportées par chacun des trajets de propagation. Les trajets de propagation étant, dans un environnement à trajets multiples, statistiquement indépendants, on réalise donc bien, avec cette technique particulière de récepteur, un traitement à base de diversité, dont l'ordre peut être élevé lorsque la réponse impulsionnelle est complexe. Le circuit de décision 26 permet de récupérer la donnée émise et, en outre, de régénérer l'horloge.

Dans la pratique, on peut traiter les signaux comme illustré sur la figure 3 annexée. Le récepteur représenté comprend deux voies analogues, l'une pour traiter la partie I du signal en phase avec la porteuse et l'autre pour traiter la partie Q en quadrature avec cette même porteuse.

La voie I comprend des premiers moyens de filtrage adaptés 50(I), aptes à remplir une première fonction de filtrage correspondant à la séquence pseudo-aléatoire utilisée à l'émission ; ces premiers moyens délivrent des échantillons $I_k$. La voie I comprend encore des premiers moyens de retard 60(I) aptes à remplir une première fonction de retard d'une durée égale à la période Ts des symboles et délivrant des échantillons $I_{k-1}$.

La voie Q comprend des seconds moyens de filtrage adapté 50(Q), aptes à remplir une seconde fonction de filtrage, correspondant toujours à la séquence pseudo-aléatoire ; ces seconds moyens délivrent des échantillons $Q_k$ ; la voie Q comprend en outre des seconds moyens de retard 60(Q) aptes à remplir une fonction de retard d'une durée Ts et délivrant des échantillons $Q_{k-1}$.

Le multiplieur 70 délivre des combinaisons de produits de ces échantillons et notamment un signal noté Dot (k) qui est égal à $I_k I_{k-1} + Q_k Q_{k-1}$ et un signal noté Cross (k) égal à $Q_k I_{k-1} - I_k Q_{k-1}$. Le circuit de la figure 3 se complète par un circuit 90 traitant les signaux Dot(k) et Cross (k) et délivrant un signal d'horloge H et les données D. Un moyen de programmation 72 pilote l'ensemble.

Cette solution ne remédie pas au problème général de ce type de récepteur dû à ce que le signal de sortie du démodulateur représente tantôt un signal proportionnel à l'énergie véhiculée sur un trajet de propagation donné (énergie égale au carré de l'amplitude de l'écho reçu), tantôt du bruit.

Le simple traitement d'intégration, effectué dans un récepteur différentiel de type connu, correspond donc à la somme non seulement des énergies véhiculées par tous les trajets de propagation mais également des signaux non représentatifs de trajets de propagation, ce qui détériore le rapport signal sur bruit. En d'autres termes, dans cette technique, on n'isole pas les pics de corrélation.

Une technique a cependant été imaginée pour tenter de s'affranchir du bruit existant entre les pics de corrélation. Il s'agit de la technique appelée RAKE (signifiant "râteau" en anglais). Elle consiste à isoler un certain nombre de trajets de propagation et à ajouter uniquement les énergies véhiculés par ces trajets. Dans cette approche, un certain nombre de filtres adaptés (corrélateurs) permettent de sonder un canal et donc de placer les dents du "râteau", d'autres corrélateurs permettant de traquer les trajets les plus énergétiques. Un traitement permet ensuite de sommer les carrés des amplitudes des trajets retenus.

Sur les architectures de type RAKE utilisant une modulation cohérente, on peut se reporter à l'article intitulé "ASIC Implementation of a Direct-Sequence Spread-Spectrum RAKE-Receiver" par Stephen D. LINGWOOD, Hans KAUFMANN, Bruno HALLER, publié dans IEEE Vehicular Technology Conference VTC'94, Stockolm, Juin 1994, pp. 1-5.

Mais cette solution présente encore des inconvénients :

- de façon pratique, seul un nombre limité de trajets de propagation peuvent être traqués (2 à 4 en pratique dans les réalisations connues) ; dans le cas de réponse impulsionnelle longue faisant apparaître un grand nombre de trajets distincts, l'ordre de diversité (c'est-à-dire le nombre d'informations statistiquement indépendantes traitées simultanément) est donc limité ; on n'utilise pas toute l'information véhiculée par le canal de transmission,

- les corrélateurs qui permettent de sonder le canal pour positionner les dents du râteau doivent avoir une agilité très grande pour pouvoir s'adapter à d'éventuelles variations rapides du canal de transmission (modulation cohérente).

Pour tenter de remédier à ces inconvénients, il faut reconsidérer la nature du signal à traiter et essayer d'imaginer un traitement satisfaisant. Dans le cas d'une modulation de phase à 2 états dite DPSK ("Differential Phase Shift Keying"), seul le signal Dot(k) doit être analysé pour retrouver les données émises. Le signal Cross (k) peut cependant être utilisé pour effectuer un contrôle automatique de fréquence.

Un signal Dot, dans le cas où il n'existe qu'un seul trajet de propagation entre l'émetteur et le récepteur, est constitué de pics tantôt positifs tantôt négatifs, selon la valeur de l'information binaire transmise. L'intervalle entre deux pics consécutifs correspond à la durée Ts d'un symbole.

Dans le cas d'une modulation de phase à 4 états dite DQPSK (Q pour "Quaternary"), les deux signaux Dot et Cross doivent être examinés simultanément pour retrouver les données émises.

Dans le cas de plusieurs trajets, les pics sont doubles, triples, quadruples, etc... pour chaque symbole, le nombre de pics détectés étant égal au nombre de trajets empruntés par l'onde radioélectrique entre émetteur et récepteur.

Un simple intégrateur, comme l'intégrateur 24 de la figure 1, intégré dans le circuit 90 de la figure 2, intègrera tous les signaux présents, c'est-à-dire à la fois les pics (correspondant à une information vraie), et le bruit (ne correspondant à aucune information). Le signal à bruit est donc faible.

Le brevet français FR-A-2 757 330 au nom du présent Demandeur décrit un moyen pour remédier à cet inconvénient. Le signal obtenu en prenant la somme des carrés des signaux Dot(k) et Cross(k), puis en extrayant la racine carrée de cette somme, reflète directement la distribution énergétique des différents trajets de propagation, chaque pic ayant pour amplitude l'énergie véhiculée par le trajet correspondant. Selon ce document, on mesure donc, d'abord, une quantité E(k) définie par :

$$E(k) = [Dot(k)^2 + Cross(k)^2]^{1/2}.$$

On effectue ensuite une opération de moyenne de l'énergie E(k) sur quelques symboles, c'est-à-dire sur quelques valeurs du rang k. Le nombre N symboles pris en compte pour cette estimation de la moyenne doit correspondre à une durée inférieure au temps de cohérence du canal, c'est-à-dire au temps au-delà duquel deux ondes distinctes de même origine n'interfèrent plus. On suppose que sur une durée égale à N fois la durée Ts d'un symbole, le canal de transmission garde ses propriétés de cohérence (hypothèse dite "de stationnarité").

A l'aide de cette moyenne E$^{moy}$, on pondère ensuite les signaux instantanés Dot(k) et Cross(k), par exemple par simple multiplication de Dot(k) et Cross(k) par la valeur E$^{moy}$. On obtient ainsi deux nouveaux signaux dits pondérés, soit Dot(k)$^{moy}$ et Cross(k)$^{moy}$. C'est sur ces signaux pondérés, reflétant la moyenne de l'énergie sur plusieurs symboles, que l'on effectue ensuite le traitement d'intégration sur une période Ts du symbole, puis la régénération de l'horloge et la récupération des données.

Le moyennage de la sortie instantanée permet de garder, sur les sorties Dot$^{moy}$ et Cross$^{moy}$, les pics correspondants à des trajets de propagation (compte tenu de l'hypothèse de stationnarité du canal sur les quelques symboles utilisés) et de diminuer de façon très importante le niveau de bruit généré par l'environnement électromagnétique, un glissement fréquentiel ou une rotation de phase.

Les avantages obtenus sont alors les suivants :

- amélioration du rapport signal sur bruit des sorties Dot$^{moy}$ et Cross$^{moy}$ avant les étages d'intégration, de récupération de l'horloge et de restitution des données binaires émises,
- prise en compte de toutes les énergies de tous les trajets de propagation (contrairement aux architectures de type RAKE),
- obtention simple d'une estimation de la réponse impulsionnelle du canal de transmission, sans limitation à un certain nombre de chemins considérés comme les plus énergétiques.

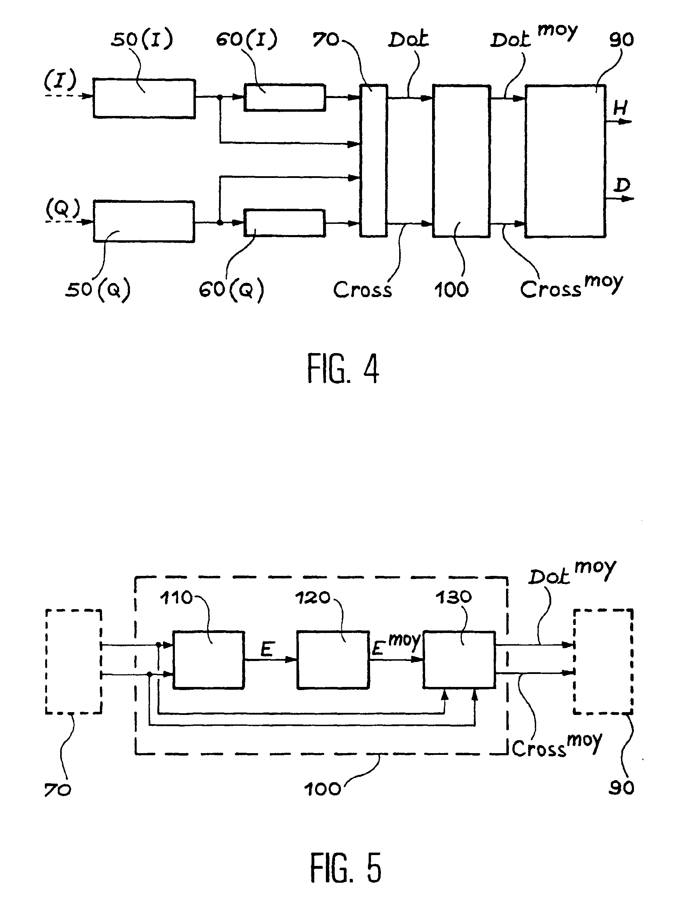

La figure 4, annexée, illustre un récepteur conforme à ce document. Ce récepteur comprend des moyens déjà décrits sur la figure 3 et qui portent les mêmes références numériques. Il comprend en outre un circuit 100 disposé entre le multiplieur 70 et le circuit 90 de restitution des données et de régénération de l'horloge. Un exemple de ce circuit 100 est illustré sur la figure 5. Il comprend un circuit 110 de calcul de l'énergie E, un circuit 120 de calcul de la moyenne E$^{moy}$, et un circuit 130 de pondération des signaux Dot et Cross (dans la suite, pour simplifier, le rang k sera omis dans les notations). Le circuit 130 délivre les signaux pondérés par la moyenne, soit Dot$^{moy}$ et Cross$^{moy}$, signaux pondérés qui sont ensuite appliqués au circuit 90.

Le document cité illustre un mode possible de réalisation de ces circuits (cf. figure 8 du document).

Si cette technique de combinaison des trajets multiples préconisée par le document 2 757 330 conduit bien aux avantages annoncés, ces avantages sont liés à la modulation différentielle DP mais ne profite pas à une modulation MOK telle que décrite plus haut. La présente invention a justement pour but de combiner ces différentes techniques pour combiner leurs avantages.

## Exposé de l'invention

Selon une première caractéristique de l'invention, on utilise une démodulation mixte en ce sens qu'elle reprend en partie la modulation MOK et en partie la modulation différentielle de phase DP. Cette dernière étant de type différentiel, la démodulation est non cohérente. Une partie des bits de chaque symbole est donc transmise selon la technique MOK, et une autre est transmise selon la technique DP, avec étalement de spectre par la séquence pseudo-aléatoire sélectionnée dans la partie MOK. En réception, on restitue d'abord la séquence pseudo-aléatoire utilisée à l'émission par filtrages parallèles adaptés, donc une partie des bits du symbole, et l'on démodule différentiellement le signal filtré approprié pour retrouver l'autre partie des bits. On conserve ainsi les avantages propres à chaque modulation/démodulation tout en augmentant l'efficacité spectrale.

Pour souligner le caractère mixte de son procédé, le Demandeur le désigne par l'abréviation "DP-MOK", qui rend compte du caractère différentiel de la partie démodulation de phase, et sa combinaison avec la technique MOK.

On peut observer qu'une telle combinaison de la technique de modulation/démodulation MOK et de la technique DP semblait a priori contre nature pour la raison suivante : en démodulation MOK, les signaux successifs correspondant à des symboles successifs apparaissent sur des voies différentes puisque, en général, les symboles successifs étant différents, il leur correspond des codes différents. Or, en démodulation DP, on doit traiter, sur la même voie, un signal et le signal précédent. A priori donc, ces deux techniques supposent des connexions différentes. La combinaison selon la première caractéristique de l'invention nécessite donc une commutation (ou une connexion) particulière entre la partie MOK et la partie DP.

Selon une seconde caractéristique de l'invention, on réalise dans la partie démodulation différentielle, une combinaison des trajets par pondération des pics et on utilise cette pondération dans la partie MOK, avant sélection de la voie la plus énergique. Le traitement de la diversité s'effectue donc aussi dans la partie MOK par pondération des énergies de chaque voie. En d'autres termes, l'estimation du canal de transmission s'effectue dans la partie DP mais est exploitée à la fois dans la partie DP et dans la partie MOK.

Il faut observer que le document US-A-5 692 007 décrit déjà un récepteur à modulations combinées différentielle de phase (DP) et à signaux orthogonaux multiples (MOK). Mais le récepteur décrit est une version simplifiée d'un récepteur cohérent, où la phase est estimée à chaque symbole à l'aide d'une table et où la démodulation différentielle est effectuée en soustrayant la phase de deux symboles consécutifs. Il ne s'agit donc pas d'une réception non cohérente comme dans la présente invention. Par ailleurs, dans ce document, on ne tient pas compte des trajets multiples de propagation à l'aide d'une structure RAKE.

De façon précise, la présente invention a pour objet un procédé de réception non cohérente d'un signal à étalement de spectre et à modulation mixte DP-MOK avec combinaison de trajets multiples, caractérisé en ce qu'il comprend les opérations suivantes :

A) on traite le signal dans une pluralité de M voies en parallèle ; dans chaque voie, on filtre le signal par un filtre adapté à une séquence pseudo-aléatoire propre à la voie ; on mesure l'énergie du signal filtré ; on pondère cette énergie par un facteur de pondération ; on détermine la voie contenant le signal pondéré le plus puissant ; on décode le numéro de cette voie pour restituer des premiers symboles d'information (mMOK) ;

B) on sélectionne le signal filtré ayant la plus forte énergie, on effectue une démodulation différentielle de phase de ce signal, ce qui produit de multiples pics de corrélation correspondant aux trajets multiples ; on calcule l'énergie de ces pics ; on pondère cette énergie par ledit facteur de pondération ; on décode cette énergie pondérée pour restituer des seconds symboles d'information (mDP) ;

C) on effectue la moyenne des pics de corrélation sur une durée déterminée correspondant à plusieurs symboles d'information, cette moyenne constituant ledit facteur de pondération agissant à la fois sur l'énergie du signal filtré dans chaque voie et sur l'énergie des pics de corrélation.

La présente invention a également pour objet un récepteur non cohérent pour la mise en oeuvre de ce procédé, caractérisé en ce qu'il comprend :

A) une pluralité de M voies en parallèle, chaque voie comprenant un filtre adapté à une séquence pseudo-aléatoire propre à la voie ; un circuit de mesure de l'énergie du signal filtré ; un circuit de pondération de cette énergie par un facteur de pondération ; des moyens pour déterminer la voie contenant le signal pondéré de plus forte énergie ; un décodeur MOK recevant le numéro de cette voie et restituant, en réponse, des premiers symboles d'information (mMOK) ;

B) des moyens pour sélectionner le signal filtré ayant la plus forte énergie ; un démodulateur différentiel de phase, lequel produit de multiples pics de corrélation correspondant à des trajets multiples ; un circuit de pondération de l'énergie des pics par ledit facteur de pondération ; un décodeur restituant des seconds symboles d'information (mDP) ;

C) des moyens de calcul de l'énergie moyenne des pics de corrélation sur une durée déterminée correspondant à plusieurs symboles d'information, cette moyenne constituant ledit facteur de pondération, la sortie de ces moyens étant reliée à la fois aux circuits de pondération des différentes voies et au circuit de pondération de l'énergie des pics de corrélation.

## Brève description des dessins

- la figure 1, déjà décrite, illustre un récepteur MOK ;
- la figure 2, déjà décrite, illustre un récepteur connu pour transmission différentielle à étalement de spectre par séquence directe ;
- la figure 3, déjà décrite, illustre un circuit numérique connu, pour le traitement de signaux I et Q ;
- la figure 4, déjà décrite, montre le schéma synoptique d'un récepteur à démodulation différentielle avec combinaison des trajets multiples ;
- la figure 5, déjà décrite, montre le schéma synoptique de moyens permettant le calcul de l'énergie et de la moyenne et l'opération de pondération ;
- la figure 6 illustre la première caractéristique de l'invention liée au caractère mixte des démodulations mises en oeuvre (DP et MOK) ;
- la figure 7 illustre la seconde caractéristique de l'invention liée à la pondération effectuée à la fois dans la partie DP et dans la partie MOK ;
- la figure 8 représente le taux d'erreur binaire en fonction du rapport signal sur bruit pour plusieurs types de démodulations.

## Description détaillée de modes particuliers de réalisation

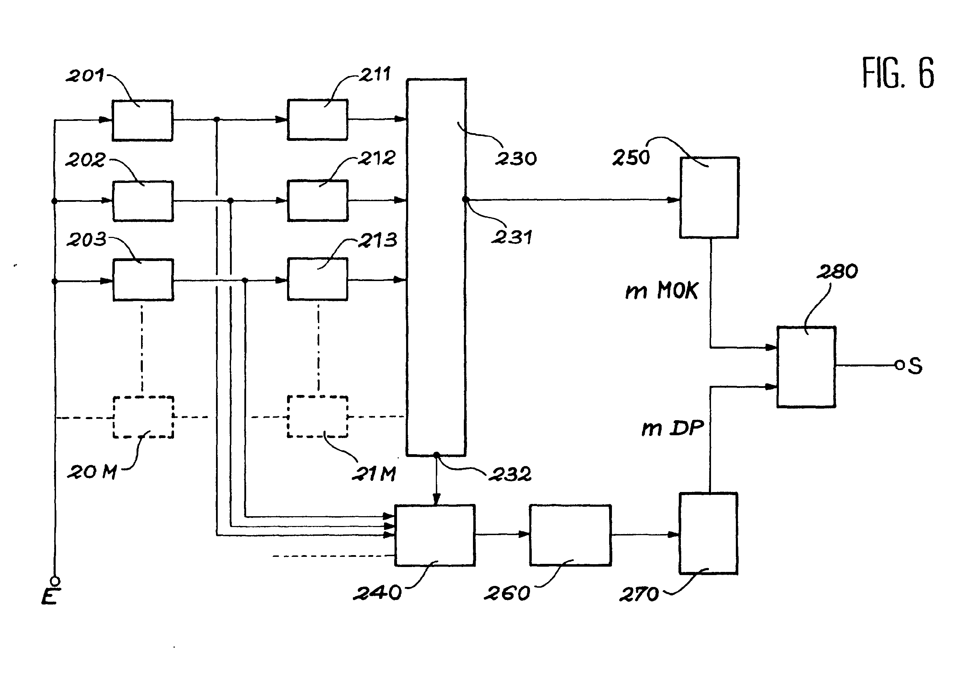

Le récepteur représenté sur la figure 6 comprend une entrée générale E reliée à une pluralité de M voies en parallèle, avec des filtres 201, 202, 203, ..., 20M adaptés aux séquences pseudo-aléatoires d'étalement utilisées à l'émission, des circuits 211, 212, 213, ..., 21M de calcul de la puissance des signaux filtrés, un circuit 230 pour déterminer la voie contenant le signal filtré le plus puissant, ce circuit possédant deux sorties 231, 232, la première délivrent le numéro de la voie contenant le signal filtré de plus forte énergie, un décodeur MOK 250 qui, à partir de ce numéro, délivre les mMOK premières données qui correspondent à ce code particulier.

Le récepteur comprend encore un circuit 240 du type démultiplexeur apte à sélectionner le signal filtré ayant la plus forte énergie, ce démultiplexeur étant commandé par le signal délivré par une seconde sortie 232 du circuit 230, un démodulateur différentiel 260 comprenant des moyens déjà décrits en liaison avec la figure 2 (20, 22, 24) ou avec la figure 3 (60(I), 60(Q), 70), et un décodeur 270 apte à restituer les mDP secondes données transmises par cette modulation différentielle.

Un circuit 280 regroupe ces premières et secondes données pour délivrer sur une sortie générale S le symbole transmis avec ses m données avec m=mMOK+mDP.

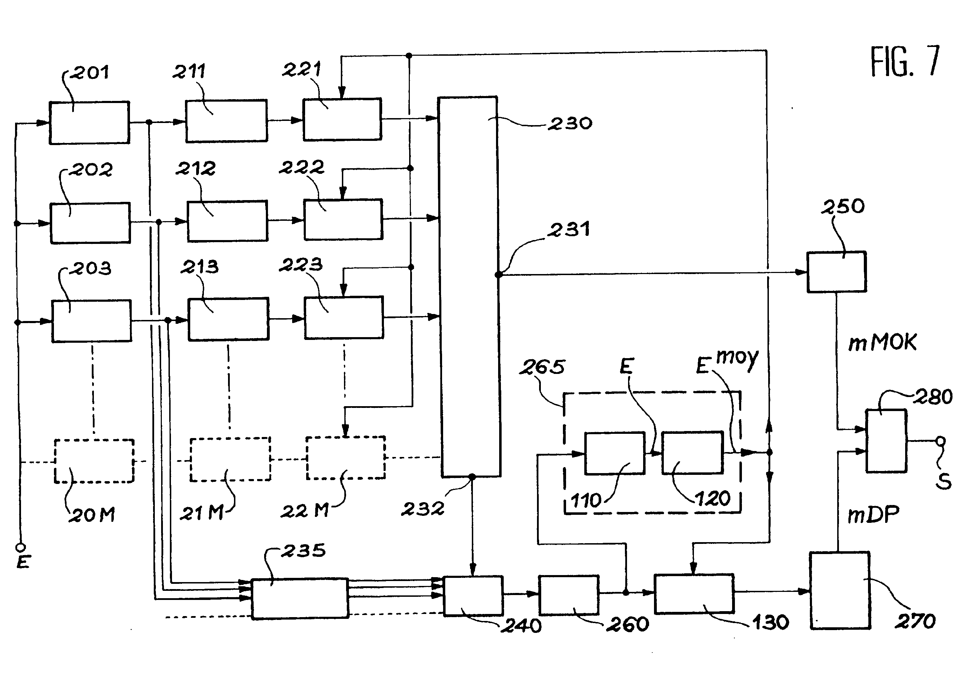

Le récepteur représenté sur la figure 7 reprend les moyens du récepteur de la figure 6, avec les mêmes références numériques et fait apparaître les moyens de prise en compte de la diversité. Ces moyens comprennent un ensemble 265 de calcul du coefficient de pondération, cet ensemble comprenant, par exemple, un circuit 110 de calcul de l'énergie E des pics de corrélation et un circuit 120 de calcul de la moyenne E$^{moy}$ de cette énergie comme sur la figure 5. Cette énergie moyenne sert à pondérer, dans un circuit 130, le signal délivré par le circuit 260 (par exemple les signaux Dot et Cross) comme sur la figure 4, et également à pondérer, dans des circuits de pondération 221, 222, 223, ..., 22M, les énergies calculées par les circuits précédents 211, 212, 213, ..., 21M. Cette pondération est effectuée avant la sélection opérée par le circuit 230. Pour que la commutation s'effectue correctement, il faut retarder convenablement tous les signaux prélevés dans les voies, ce qui est représenté par la ligne à retard 235.

A titre d'exemple, pour choisir les valeurs de mMOK et mDP, on peut suivre les règles suivantes :

- mMOK grand (supérieur à 4 par exemple) conduit à un accroissement considérable de la complexité (l'accroissement est exponentiel) ;
- mDP grand (supérieur à 2 par exemple) entraîne une perte rapide de robustesse de la modulation dans les environnements difficiles.

Le choix de ces deux paramètres fait donc le plus souvent l'objet d'un compromis. A titre d'exemple, pour des codes de longueur 32, où la partie DP est quaternaire (DQPSK) et où la partie MOK est réalisée avec M=8 on pourra prendre m égal à 5 avec mMOK=3 et mDP=2. L'efficacité spectrale obtenue est de 0,078 bps/Hz. En DQPSK classique, elle vaudrait 0,031 bps/Hz avec le même gain de traitement et 0,078 bps/Hz avec un gain de traitement ramené de 15 à 10 dB.

En termes de taux d'erreur binaire, la figure 8 (planche 1/5) montre les variations de ce taux TEB en fonction du rapport signal sur bruit Eb/No porté en abscisses et exprimé en dB. La courbe A correspond à la modulation DQPSK classique avec un débit de 1 Mbps, la courbe B à la modulation MOK avec M=8 à 1,5 Mbps et enfin la courbe C à la présente invention DP-MOK avec M=8 et un débit de 2,5 Mbps.

**Revendications**

1. Procédé de réception non cohérente d'un signal à étalement de spectre et à modulation mixte DP-MOK avec combinaison de trajets multiples, **caractérisé en ce qu'**il comprend les opérations suivantes :

   A) on traite le signal dans une pluralité de M voies en parallèle ; dans chaque voie, on filtre le signal par un filtre adapté à une séquence pseudo-aléatoire propre à la voie ; on mesure l'énergie du signal filtré ; on pondère cette énergie par un facteur de pondération ; on détermine la voie contenant le signal pondéré le plus puissant ; on décode le numéro de cette voie pour restituer des premiers symboles d'information (mMOK) ;
   B) on sélectionne le signal filtré ayant la plus forte énergie ; on effectue une démodulation différentielle de phase de ce signal, ce qui produit de multiples pics de corrélation correspondant aux trajets multiples ; on calcule l'énergie de ces pics ; on pondère cette énergie par ledit facteur de pondération ; on décode cette énergie pondérée pour restituer des seconds symboles d'information (mDP) ;
   C) on effectue la moyenne des pics de corrélation sur une durée déterminée correspondant à plusieurs symboles d'information, cette moyenne constituant ledit facteur de pondération agissant à la fois sur l'énergie du signal filtré dans chaque voie et sur l'énergie des pics de corrélation.

2. Récepteur non cohérent pour signal à étalement de spectre et à modulation mixte DP-MOK pour la mise en oeuvre du procédé selon la revendication 1, **caractérisé en ce qu'**il comprend :

   A) une pluralité de M voies en parallèle, chaque voie comprenant un filtre adapté (201, ..., 20M) à une séquence pseudo-aléatoire propre à la voie ; un circuit de mesure de l'énergie du signal filtré (211, ..., 21M) ; un circuit de pondération de cette énergie (221, ..., 22M) par un facteur de pondération ; des moyens (230) pour déterminer la voie contenant le signal pondéré de plus forte énergie ; un décodeur MOK (250) recevant le numéro de cette voie et restituant, en réponse, des premiers symboles d'information (mMOK) ;
   B) des moyens (240) pour sélectionner le signal filtré ayant la plus forte énergie ; un démodulateur différentiel de phase (260), lequel produit de multiples pics de corrélation correspondant aux trajets multiples ; un circuit de pondération (130) de l'énergie des pics par ledit facteur de pondération ; un décodeur PSK (270) restituant des seconds symboles d'information (mDP) ;
   C) des moyens (265) de calcul de l'énergie moyenne des pics de corrélation sur une durée déterminée correspondant à plusieurs symboles d'information, cette moyenne constituant ledit facteur de pondération, la sortie de ces moyens (265) étant reliée à la fois aux circuits de pondération (221, ..., 22M) des différentes voies et au circuit de pondération (130) de l'énergie des pics de corrélation.

## Claims

1. Non-coherent reception method for a signal with spectrum spreading and DP-MOK mixed modulation with multipath combination, **characterised in that** it comprises the following operations:

   A) the signal is processed in a plurality of M channels in parallel; in each channel, the signal is filtered by a filter adapted to a pseudo-random sequence specific to the channel; the energy of the filtered signal is measured; that energy is weighted by a weighting factor; the channel containing the weighted signal with the highest power is determined; the number of that channel is decoded in order to reconstruct first information symbols (mMOK);
   B) the filtered signal having the highest energy is selected; differential phase modulation of that signal is carried out, which produces multiple correlation peaks corresponding to the multiple paths; the energy of those peaks is calculated; the energy is weighted by said weighting factor; the weighted energy is decoded in order to reconstruct second information symbols (mDP);
   C) the average of the correlation peaks is taken over a given period corresponding to a plurality of information symbols, that average constituting said weighting factor influencing both the energy of the filtered signal in each channel and the energy of the correlation peaks.

2. Non-coherent receiver for a signal with spectrum spreading and DP-MOK mixed modulation, for carrying out the method according to claim 1, **characterised in that** it comprises:

   A) a plurality of M channels in parallel, each channel comprising a filter (201, ..., 20M) adapted to a pseudo-random sequence specific to the channel; a circuit for measuring the energy of the filtered signal (211, ..., 21M); a circuit for weighting that energy (221, ..., 22M) by a weighting factor; means (230) for determining the channel containing the weighted signal having the highest energy; a MOK decoder (250) which receives the number of that channel and, in response, reconstructs first information signals (mMOK);
   B) means (240) for selecting the filtered signal having the highest energy; a differential phase demodulator (260) which produces multiple correlation peaks corresponding to the multiple paths; a circuit (130) for weighting the energy of the peaks by said weighting factor; a PSK decoder (270) which reconstructs second information symbols (mDP);
   C) means (265) for calculating the average energy of the correlation peaks over a given period corresponding to a plurality of information symbols, that average constituting said weighting factor, the output of those means (265) being connected both to the weighting circuits (221, ..., 22M) of the various channels and to the circuit (130) for weighting the energy of the correlation peaks.

## Patentansprüche

1. Verfahren für den nicht-kohärenten Empfang eines Signals mit Spektrumspreizung und gemischter DP-MOK Modulation in Verbindung mit Mehrwegausbreitung, **dadurch gekennzeichnet, dass** es die folgenden Schritte umfasst:

   A) das Signal wird in einer Mehrzahl von M parallelen Kanälen verarbeitet; in jedem Kanal wird das Signal durch einen Filter gefiltert, der an eine dem Kanal eigene Pseudozufallssequenz angepasst ist; die Energie des gefilterten Signals wird gemessen; diese Energie wird mittels eines Gewichtungsfaktors gewichtet; der Kanal, der das als am stärksten gewichtete Signal enthält, wird bestimmt; die Nummer dieses Kanals wird decodiert, um erste Informationssymbole (mMOK) zu rekonstruieren;
   B) das gefilterte Signal mit der größten Energie wird ausgewählt; eine differentielle Phasendemodulation dieses Signals wird durchgeführt, was den Mehrwegen entsprechende Mehrfachkorrelationspeaks erzeugt; die Energie dieser Peaks wird berechnet; diese Energie wird durch den Gewichtungsfaktor gewichtet; diese gewichtete Energie wird decodiert, um zweite Informationssymbole (mDP) zu rekonstruieren;
   C) der Durchschnitt der Korrelationspeaks wird über eine bestimmte Zeit gebildet, die mehreren Informationssymbolen entspricht, wobei dieser Durchschnitt den Gewichtungsfaktor darstellt, der gleichzeitig auf die Energie des in jedem Kanal gefilterten Signals und auf die Energie der Korrelationspeaks einwirkt.

2. Nicht-kohärenter Empfänger für ein Signal mit Spektrumspreizung und gemischter DP-MOK Modulation, um das Verfahren nach Anspruch 1 durchzuführen, **dadurch gekennzeichnet, dass** er aufweist:

   A) eine Vielzahl von M parallelen Kanälen, wobei jeder Kanal einen angepassten Filter (201, ..., 20M) mit einer dem Kanal eigenen Pseudozufallssequenz enthält; eine Schaltung zur Messung der Energie des gefilterten Signals (211, ..., 21M); eine Schaltung zur Gewichtung dieser Energie (221, ..., 22M) mittels eines Ge-

**EP 1 184 996 B1**

wichtungsfaktors; Mittel (230), um den Kanal zu bestimmen, der das als mit der stärksten Energie gewichtete Signal enthält; einen MOK Decodierer(250), der die Nummer dieses Kanals empfängt und, als Antwort, erste Informationssymbole (mMOK) rekonstruiert;

B) Mittel (240), um das gefilterte Signal mit der stärksten Energie auszuwählen; einen differentiellen Phasendemodulator (260), der Mehrfachkorrelationspeaks erzeugt, welche den Mehrfachwegen entsprechen; eine Schaltung (130) zur Gewichtung der Energie der Peaks mittels des Gewichtungsfaktors; einen PSK Decodierer (270), der zweite Informationssymbole (mDP) rekonstruiert;

C) Mittel (265) zur Berechnung der durchschnittlichen Energie der Korrelationspeaks über eine bestimmte Dauer, mehreren Informationssymbolen entsprechend, wobei dieser Durchschnitt den Gewichtungsfaktor darstellt, wobei der Ausgang dieser Mittel (265) gleichzeitig mit den Gewichtungsschaltungen (221, ..., 22M) der verschiedenen Kanäle und mit der Schaltung (130) zur Gewichtung der Energie der Korrelationspeaks verbunden ist.

FIG. 1

FIG. 8

FIG. 2

FIG. 3

FIG. 4

FIG. 5

FIG. 6

201  202  203  20 M  211  212  213  21 M  230  231  232  240  260  270  250  280

m MOK

m DP

E

S

EP 1 184 996 B1

13

FIG. 7

EP 1 184 996 B1